Europäisches Patentamt

European Patent Office

Office européen des brevets

(11) Numéro de publication: **0 228 322**
**A1**

(12) # DEMANDE DE BREVET EUROPEEN

(21) Numéro de dépôt: 86402582.0

(51) Int. Cl.⁴: **G 06 K 9/48**

(22) Date de dépôt: 20.11.86

(30) Priorité: 25.11.85 FR 8517398

(43) Date de publication de la demande:
08.07.87 Bulletin 87/28

(84) Etats contractants désignés:
BE CH DE FR GB LI NL

(71) Demandeur: **COMMISSARIAT A L'ENERGIE ATOMIQUE
Etablissement de Caractère Scientifique Technique et
Industriel
31/33, rue de la Fédération
F-75015 Paris (FR)**

(72) Inventeur: **Gokana, Denis
Chez Mondjo 17 Square de la Garenne
F-95500 Gonesse (FR)**

**Juvin, Didier
14, Boulevard Edgar Quinet
F-75014 Paris (FR)**

(74) Mandataire: **Mongrédien, André et al
c/o BREVATOME 25, rue de Ponthieu
F-75008 Paris (FR)**

(54) Procédé de reconnaissance de caractères en temps réel, notamment sur des objets en défilement rapide.

(57) Procédé de reconnaissance de caractères en temps réel, notamment sur des objets en défilement rapide.

Procédé dans lequel on obtient une image d'un caractère au moyen d'une caméra, procédé caractérisé en ce que l'image est analysée séquentiellement ligne par ligne pour déterminer les profils gauche (PG) et droit (PD) dudit caractère, et pour comparer lesdits profils à des modèles de profils contenus dans une bibliothèque, ladite comparaison permettant de déterminer ledit caractère analysé. Les profils gauche et droit peuvent être codés par des segments de direction prédéterminé avant d'être comparés aux modèles de profils.

FIG. 5a

FIG. 6a

FIG. 6b

EP 0 228 322 A1

**Description**

PROCEDE DE RECONNAISSANCE DE CARACTERES EN TEMPS REEL, NOTAMMENT SUR DES OBJETS EN DEFILEMENT RAPIDE

La présente invention a pour objet un procédé de reconnaissance de caractères en temps réel, notamment sur des objets en défilement rapide. Les caractères à reconnaître peuvent être quelconques, et notamment numériques ou alphanumériques.

Le procédé de l'invention est du type de ceux dans lesquels un caractère est lu par un moyen de saisie, puis traité avant d'être reconnu par comparaison à des modèles de caractères contenus dans une bibliothèque. Il s'applique en particulier à la reconnaissance de caractères, imprimés ou manuscrits, d'une page de document. Il s'applique également, par exemple, en sidérurgie pour la reconnaissance de produits métallurgiques défilant sur un tapis roulant et portant chacun un code alphanumérique gravé.

De nombreux procédés ont déjà été proposés pour reconnaître des caractères, et en particulier des caractères alphanumériques. Dans la plupart des procédés, le moyen de saisie du caractère est une caméra vidéo. Un tel moyen de saisie peut être adapté à la saisie de caractère fixes, mais présente des inconvénients pour la saisie de caractères défilant sous la caméra. En effet, on constate sous éclairage continu un phénomène de traînée et de flou dû à la vitesse du produit défilant ; par ailleurs, il faut alors sélectionner les images délivrées par la caméra vidéo pour en trouver une qui contienne entièrement le caractère. Cette analyse préliminaire est coûteuse en temps et ne permet pas de faire de la reconnaissance de caractère en temps réel.

On connaît également des systèmes de reconnaissance dans lesquels le moyen de saisie est une tablette graphique. Dans ce cas, le caractère est re connu immédiatement après avoir été tracé sur la tablette graphique. De tels systèmes ont donc des applications limitées.

La rapidité de reconnaissance d'un caractère dépend du moyen de saisie utilisé, mais aussi, et surtout, du traitement effectué sur l'image délivrée par ce moyen de saisie.

De manière générale, dans les systèmes de reconnaissance de l'art antérieur, le traitement est effectué sur l'image complète, c'est-à-dire sur un signal bidimensionnel. Parmi les procédés de traitement connus, on peut citer la squelettisation du caractère ou le suivi de contour du caractère. Ces procédés de traitement peuvent être utilisés indépendamment ou peuvent être combinés.

Ces traitements exigent des temps de calcul élevés car ils s'appliquent à l'image complète, c'est-à-dire à un signal bidimensionnel. Il n'est donc pas possible d'utiliser de tels traitements connus pour faire de la reconnaissance de caractères en temps réel sur des systèmes simples, des microprocesseurs bas de gamme par exemple.

Le but de l'invention est de pallier les insuffisances des systèmes connus afin de permettre la reconnaissance en temps réel de caractères défilant devant un moyen de saisie.

Ce but est atteint par un procédé consistant essentiellement à extraire de l'image, par une analyse linéaire de celle-ci, les profils gauche et droit du caractère. Ces profils sont définis comme étant l'ensemble constitué par l'extrémité gauche du premier segment rencontré sur chaque ligne (pour le profil gauche) et celui de l'extrémité droite du dernier segment rencontré sur chaque ligne (pour le profil droit). Ces profils peuvent être ensuite schématisés par une suite de segments de droites. Les profils gauche et droit, éventuellement segmentés, sont enfin comparés à des modèles de profils contenus dans une bibliothèque, ce qui achève la reconnaissance du caractère.

La rapidité du procédé de reconnaissance résulte d'une part des données géométriques choisies-profils gauche et droit- pour faire la reconnaissance du caractère, et d'autre part du choix d'une analyse linéaire, c'est-à-dire monodimensionnelle, les lignes successives de l'image étant traitées séquentiellement.

L'image étant traitée ligne par ligne, il est avantageux d'utiliser un moyen de saisie tel qu'une caméra linéaire, par exemple une caméra linéaire du type dispositif à transfert de charge (en abrégé D.T.C. et en terminologie anglosaxonne : C.C.D.). Une telle caméra présente l'avantage, notamment sur les caméras vidéo, d'avoir un temps de pose réglable ce qui lui permet d'être utilisée pour la saisie d'objets peu éclairés ou en défilement rapide.

Dans le cas de la reconnaissance d'un caractère non mobile, le moyen de saisie peut être une caméra DTC matricielle. L'image est saisie globalement mais le traitement de reconnaissance du caractère reste un traitement ligne par ligne. Dans certains cas particuliers (éclairement convenable, ...), la caméra matricielle peut éventuellement être remplacée par une caméra vidéo.

De manière précise, l'invention a pour objet un procédé de reconnaissance de caractères en temps réel, notamment sur des objets en défilement rapide consistant à obtenir une image d'un caractère au moyen d'une caméra, et traiter ladite image ligne par ligne pour déterminer les profils gauche et droit dudit caractère et pour comparer lesdits profils à des modèles de profils contenus dans une bibliothèque, cette comparaison permettant de reconnaître ledit caractère.

De manière préférée, les profils gauche et droit du caractère sont remplacés chacun par une suite de segments avant d'être comparés à des modèles de profils qui sont également représentés par des suites de segments.

L'analyse de chaque ligne d'image permet de détecter les deux pixels appartenant au profil gauche et au profil droit du caractère. A partir de ces pixels, les profils gauche et droit sont construits en temps réel, en même temps que l'analyse ligne à ligne de l'image.

De manière avantageuse, l'analyse d'une ligne d'image inclut également un traitement d'extraction des données topologiques du caractère, telles que présence et nombre de trous, voûtes ou creux dans le caractère. L'extraction de ces données topologiques est réalisée par comparaison entre la ligne analysée et la ligne précédente suivant un algorithme de connexité.

Cette prise en compte des données topologiques est connue en soi, mais est en général appliquée à l'image complète, c'est-à-dire à un signal bidimensionnel. Elle permet de supprimer certaines ambiguïtés lorsque deux caractères différents ont des profils gauche et droit qui peuvent être proches, ce qui est le cas si le nombre de caractères différents à reconnaître est important.

L'enchaînement de ces méthodes obéit à une arborescence hiérarchisée multi-niveaux.

Les caractéristiques et avantages de l'invention ressortiront mieux de la description qui va suivre, donnée à titre illustratif mais non limitatif, en référence aux dessins annexés sur lesquels :

- la figure 1 représente schématiquement un système de reconnaissance de caractères pour la mise en oeuvre du procédé de l'invention,

- la figure 2 est un organigramme du procédé de l'invention,

- les figures 3a, 3b et 3c représentent respectivement le signal délivré par la caméra, un signal convolué correspondant et l'état des pixels d'une ligne d'image après le seuillage du signal convolué,

- la figure 4a est un organigramme illustrant l'approximation linéaire du profil gauche d'un caractère analysé,

- les figures 4b, 4c, 4d et 4e sont des exemples de configurations du profil gauche qui expliquent le fonctionnement de l'organigramme de la figure 4a,

- les figures 5a, 5b et 5c illustrent respectivement un caractère à analyser, un ensemble des segments utilisés pour le codage de Freeman dudit caractère, et les profils gauche et droit dudit caractère codé,

- les figures 6a et 6b illustrent respectivement un autre ensemble de segments utilisés pour le codage de Freeman d'un caractère, et les profils gauche et droit du caractère de la figure 5a codé par ledit autre ensemble de segments ;

- la figure 7a est un organigramme de reconnaissance d'un caractère codé par comparaison de ses profils gauche et droit à des modèles de profils contenus dans une bibliothèque, lorsque ledit caractère est tracé selon la police de caractères de la figure 7b ;

- les figures 8a, 8b, 8c illustrent respectivement les formes de type voûte, creux et trou qui sont détectées par une étude de la connexité entre la ligne d'image en cours d'analyse et la ligne précédente,

- les figures 9a et 9b représentent respectivement un caractère et ses profils gauche et droit, lesdits profils ne permettant pas, à eux seuls, de reconnaître ledit caractère ;

- la figure 10 est un graphe montrant le chemin optimal passant par les extrêmités de deux chaînes de codes, et

- la figure 11 est un organigramme illustrant une méthode de calcul de la distance entre deux profils, par comparaison dynamique.

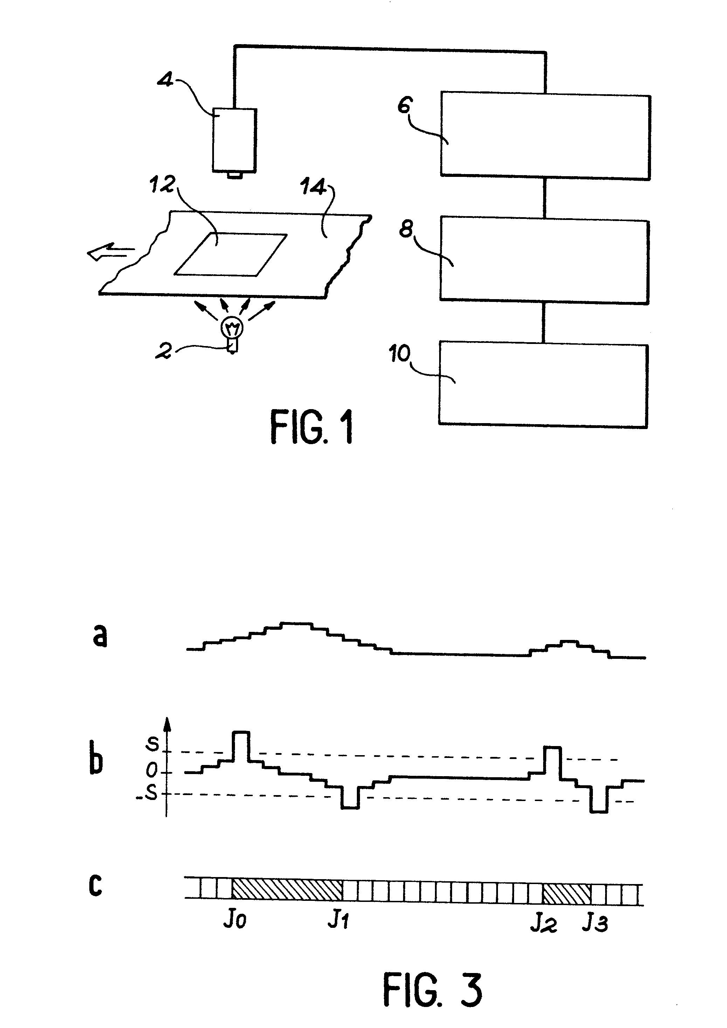

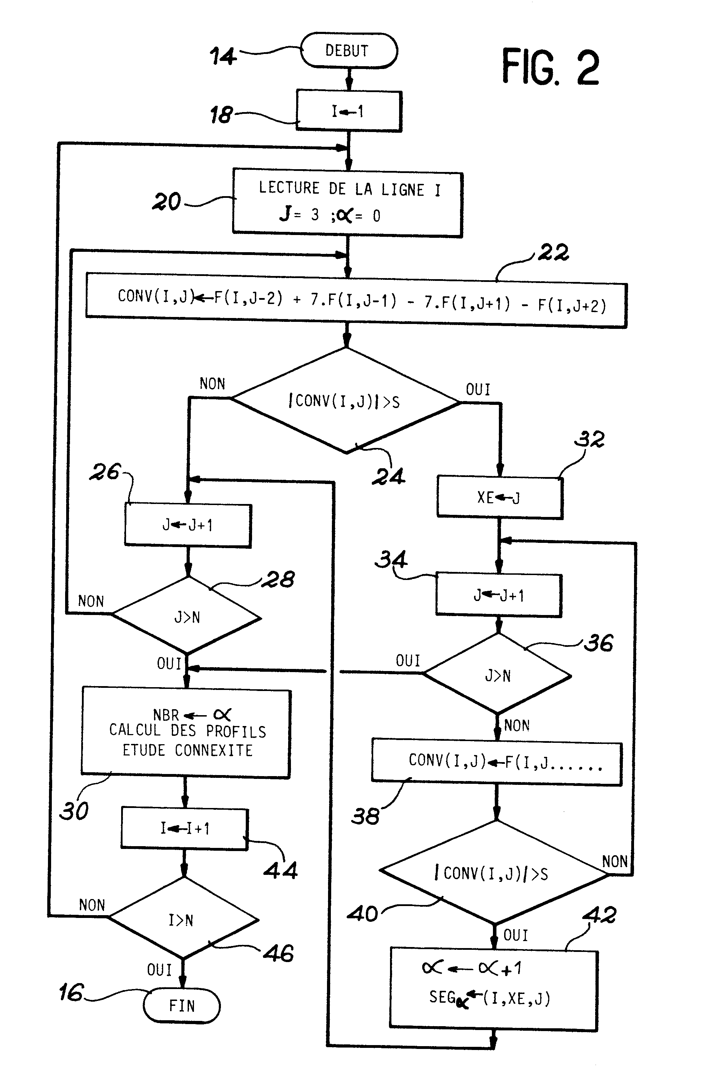

On a représenté sur la figure 1 un système de reconnaissance de caractères pour la mise en oeuvre du procédé de l'invention. Ce système comprend une source lumineuse 2, une caméra 4, un moyen de contrôle 6 de la caméra, un circuit logique 8 et un moyen à microprocesseur 10.

Le caractère 12 à reconnaître est placé sur un support 14. Ce support peut être par exemple un objet dont le caractère 12 constitue un code d'identification. Le système de reconnaissance est alors utilisé pour reconnaître des objets, par exemple pour leur stockage.

Dans le cas où le caractère est en défilement sous la caméra, cette dernière est de préférence une caméra linéaire du type dispositif à transfert de charge (en abrégé D.T.C). L'avantage d'une caméra linéaire, par rapport à une caméra DTC matricielle ou une caméra vidéo, est qu'il ne se pose pas de problème de synchronisation de la caméra pour la saisie du caractère. Par ailleurs, l'utilisation d'une caméra DTC est intèressante en ce qu'elle peut être utilisée dans des conditions de faible éclairement, ce qui n'est pas le cas des caméras vidéo.

Dans le cas où le caractère est fixe sous la caméra, une caméra DTC matricielle peut être utilisée avantageusement.

A titre d'exemple, le système de la figure 1 est adapté à la reconnaissance de caractères en défilement rapide et comporte une caméra DTC linéaire du type TH 7804 de THOMSON.

Le signal délivré par la caméra est traité par le moyen de contrôle 6. Celui-ci règle notamment la durée d'exposition en fonction de la vitesse de défilement, par exemple à une valeur de l'ordre de 200 μs. Ce moyen de contrôle peut être notamment la carte d'évaluation THX 1061 associée à la caméra TH 7804. L'intensité de la source lumineuse 2 est réglée en fonction de la durée d'exposition. Elle est de l'ordre de 2500 μW/cm$^2$ dans le cas de la caméra TH 7804 pour une exposition de 200 μs. La source lumineuse 2 est recouverte d'un filtre infrarouge SCHOTT KG 1.

Le signal délivré par le moyen de contrôle 6, qui représente une ligne d'image, est reçu dans le circuit logique 8. Celui-ci réalise une conversion analogique-numérique dudit signal et, éventuellement, d'autres traitements telle qu'une convolution. Ces traitements seront précisés en relation avec l'organigramme de la figure 2.

Le signal numérique délivré par le circuit logique 8 est ensuite traité par le moyen à microprocesseur 10 conformément au procédé de l'invention pour détecter les profils gauche et droit du caractère analysé, éventuellement segmenter lesdits profils et pour comparer les profils éventuellement segmentés à des modèles de profils contenus dans une bibliothèque.

Le moyen 10 comprend un microprocesseur, par exemple de type 8086 de INTEL, une mémoire morte contenant la bibliothèque de modèles de profils et un programme correspondant au procédé de l'invention, une mémoire vive pour stocker des données ou des résultats temporaires, et des moyens d'entrée-sortie pour recevoir le signal délivré par le circuit logique 8 et pour délivrer un signal représentatif du caractère analysé vers un moyen d'affichage (non représenté) tel qu'un écran ou une imprimante.

On va maintenant décrire le procédé de l'invention en relation avec l'organigramme de la figure 2.

Cet organigramme comprend un ensemble d'étapes de calculs et d'interrogations disposées entre une étiquette de début 14 et une étiquette de fin 16. Les étapes de calcul sont représentées par des rectangles à une entrée et une sortie, et les étapes d'interrogation par des losanges à une entrée et à deux sorties, l'une correspondant à une réponse affirmative à l'interrogation, l'autre à une réponse négative.

De manière générale, le procédé de l'invention consiste lire séquentiellement chaque ligne d'image, chaque ligne étant traitée en temps réel aussitôt après avoir été lue. Le traitement consiste à détecter les deux pixels de la ligne appartenant aux profils gauche et droit du caractère. La reconnaissance de ces pixels est faite, dans l'organigramme de la figure 2, par une convolution sur le signal de ligne, suivie d'un seuillage. Ces pixels ayant été détectés, les profils gauche et droit sont mis à jour. L'analyse de la ligne peut être complétée par une étude de connexité entre les pixels de la ligne analysée et les pixels de la ligne précédente pour déterminer les éléments topologiques du caractère analysé, tels qu'une voûte, un creux ou un trou.

Dans l'organigramme de la figure 2, on a détaillé uniquement les opérations de convolution et de seuillage permettant de détecter les pixels appartenant aux profils gauche et droit. La mise à jour des profils et l'étude de la connexité seront décrits ultérieurement.

Dans cet organigramme, on utilise les indices suivants :
- indice I, qui désigne le numéro de la ligne analysée de l'image,
- indice J, qui désigne un numéro de pixel dans la ligne analysée (i.e. numéro de colonne) ; le couple (I,J) désigne donc un pixel de l'image,
- indice $\alpha$, qui désigne un numéro de segment dans la ligne analysée, un segment est un ensemble de pixels consécutifs dans une ligne qui appartiennent au caractère à reconnaître.

La première étape 18 de l'organigramme est une étape d'initialisation à 1 de l'indice de ligne I. L'étape suivante 20 comprend la lecture de la ligne I et les initialisations des indices de colonne J et de nombre de segments $\alpha$. L'indice $\alpha$ est initialisé à 0 ; pour l'indice J, la valeur initiale dépend de la fenêtre de convolution. A titre d'exemple, on a choisi une fenêtre de 5 pixels, et on initialise donc l'indice J avec la valeur 3.

L'étape 20 est suivie de l'étape 22 de calcul de la convoluée discrète du pixel (I,J). La convolution est linéaire et utilise, dans l'exemple choisi, une fenêtre de 5 pixels avec les coefficients : -1, -7, 0, +7, +1. Ces coefficients correspondants à une fonction de convolution du type dérivée d'une gaussienne, soit

$$g(x) = -\frac{x}{\sqrt{6}} \cdot \exp\left[-\frac{x^2}{2\,6}\right]$$

(où 6 est l'écart type).

On a représenté respectivement sur les figures 3a et 3b un signal de ligne délivré par le moyen de contrôle de la caméra et le signal convolué correspondant. La convolution permet de mieux marquer la frontière entre un pixel correspondant au caractère et un pixel correspondant au fond de l'image. La détection de ces frontières est réalisée par le test 24 dans lequel le niveau de la valeur absolue du signal convolué est comparé à un seuil prédéterminé S.

Lorsque le résultat de la comparaison est négatif, c'est-à-dire si la valeur du signal convolué pour le pixel (I,J) est inférieur au seuil S, on passe au pixel suivant de la ligne par incrémentation de l'indice de colonne J (étape 26), et on reprend pour ce pixel les étapes 22 et 24. Après l'étape 26 d'incrémentation, on effectue un test 28 pour déterminer si le pixel analysé est le dernier de la ligne. Si c'est le cas, c'est-à-dire si J = N où N est le nombre de pixels par ligne, on ne reprend pas l'étape 22 mais on passe à une étape 30 de calcul des profils et d'étude de connexité. Nous reviendrons sur cette étape dans la suite de la description.

Lorsque le résultat de la comparaison faisant l'objet du test 24 est positif, on exécute une étape 32 de mémorisation du numéro de colonne du pixel courant dans une variable XE. On passe ensuite au pixel suivant par une étape 34 d'incrémentation du numéro de colonne J, analogue à l'étape 26, et on détermine, par un test 36 analogue au test 28, si le pixel analysé est le dernier de la ligne. Si tel est le cas, le traitement se poursuit par l'étape 30. Dans le cas contraire, on calcule la convoluée du nouveau pixel courant dans une étape 38 analogue à l'étape 22 et on compare la valeur de ladite convoluée au seuil S dans un test 40 analogue au test 24.

Lorsque ce test est négatif, le traitement se poursuit par l'étape 34. Dans le cas contraire, le pixel courant termine un segment de pixels appartenant au caractère. Ce segment est mémorisé dans l'étape 42. Après cette mémorisation, le traitement reprend par l'étape 26.

A la fin de l'analyse de la ligne I, c'est-à-dire au début de l'étape 30, le signal de ligne se présente sous la forme d'une suite de pixels "blancs", pour les pixels correspondant au fond de l'image, ou "noirs", pour les pixels correspondants à la trace du caractère.

Sur la figure 3c, la ligne I comporte un premier segment de pixels "noirs" entre les indices de colonne $J_0$ et $J_1$, et un second segment entre les indices de colonne $J_2$ et $J_3$. Cette ligne de pixels est obtenue par le

4

procédé suivant l'organigramme de la figure 2 de la manière suivante.

Pour chacun des pixels de la ligne I compris entre les indices de colonne $J = 3$ et $J = J_0-1$, le traitement correspond aux étapes successives 22, 24, 26 et 28. Pour le pixel d'indice de colonne $J = J_0$, le traitement comporte les étapes successives 22, 24 puis 32, suivies de 34 et 36. L'étape 32 permet de mémoriser le début d'un segment de pixels "noirs". Pour chacun des pixels suivants de ce segment, le traitement comporte les étapes successives 38, 40, 34 et 36. Ce traitement est identique à celui appliqué aux pixels "blancs" dont l'indice de colonne est compris entre 0 et $J_0-1$.

Lorsque le pixel analysé est le dernier d'un segment de pixels "noirs", le segment est mémorisé par l'étape 42 sous forme d'un triplet $(I, J_0, J_1)$. Pour le pixel suivant de la ligne, le traitement est identique à celui du premier pixel analysé de la ligne. Le deuxième segment est détecté et mémorisé de la même manière que le premier segment.

Revenons à la figure 2. Lorsque tous les pixels de la ligne ont été analysés, on passe l'étape 30 qui consiste :
- à mémoriser le nombre NBR de segments de pixels "noirs" de la ligne I,
- à calculer les profils gauche et droit du caractère en tenant compte des profils élaborés entre les lignes 1 et I-1 et des pixels $(I, J_0)$ et $I, J_3)$ (figure 3c),
- à étudier la connexité des segments de la ligne I avec les segments de la ligne I-1 pour détecter des formes particulières dans le caractère, telles qu'une voûte, un creux ou un trou.

Les traitements de l'étape 30 seront décrits en détail dans la suite de la description. Cette étape est suivie d'une étape 44 d'incrémentation de l'indice de ligne I et d'un test 46 de fin d'exploration du caractère (comparaison de l'indice de ligne courant au nombre de lignes). Selon le résultat de ce test, le traitement reprend à l'étape 20 pour une nouvelle ligne, ou se termine sur l'étiquette de fin 16.

Dans l'étape 30 de l'organigramme de la figure 2, on réalise deux opérations distinctes : une opération de segmentation des profils gauche et droit du caractère, c'est-à-dire d'approximation desdits profils par des segments de droite, et une opération d'analyse de la topologie du caractère (présence de voûte, de creux ou de trou). Cette deuxième opération n'est pas toujours nécessaire mais devient utile lorsque le nombre de caractères différents à reconnaître est important, car alors des caractères différents peuvent avoir un profil identique.

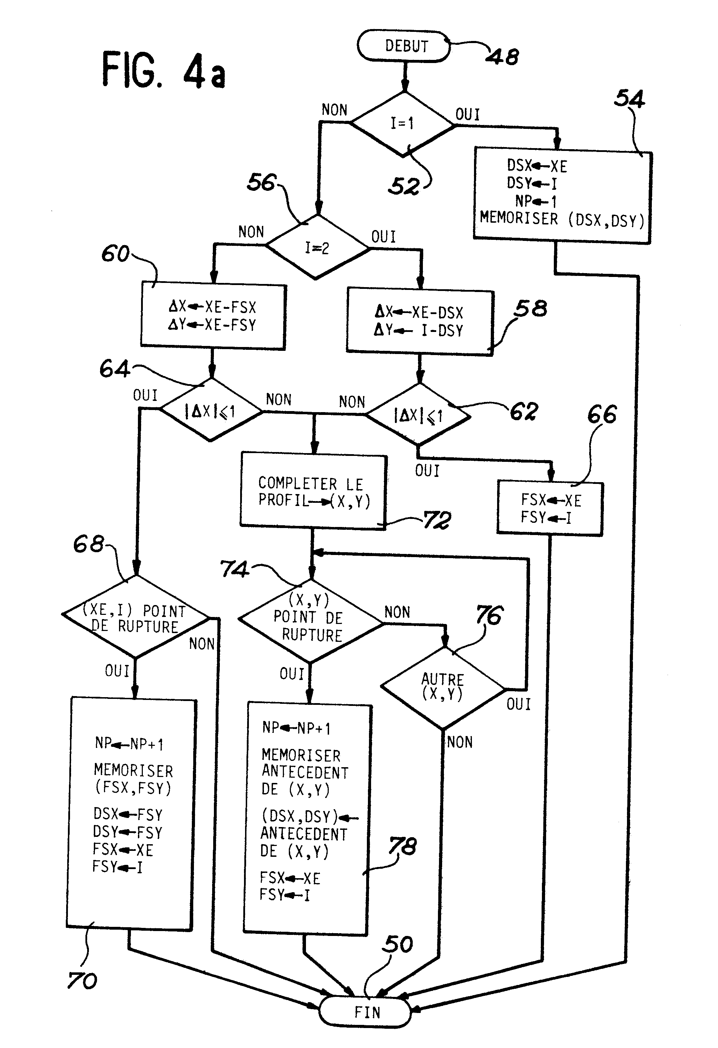

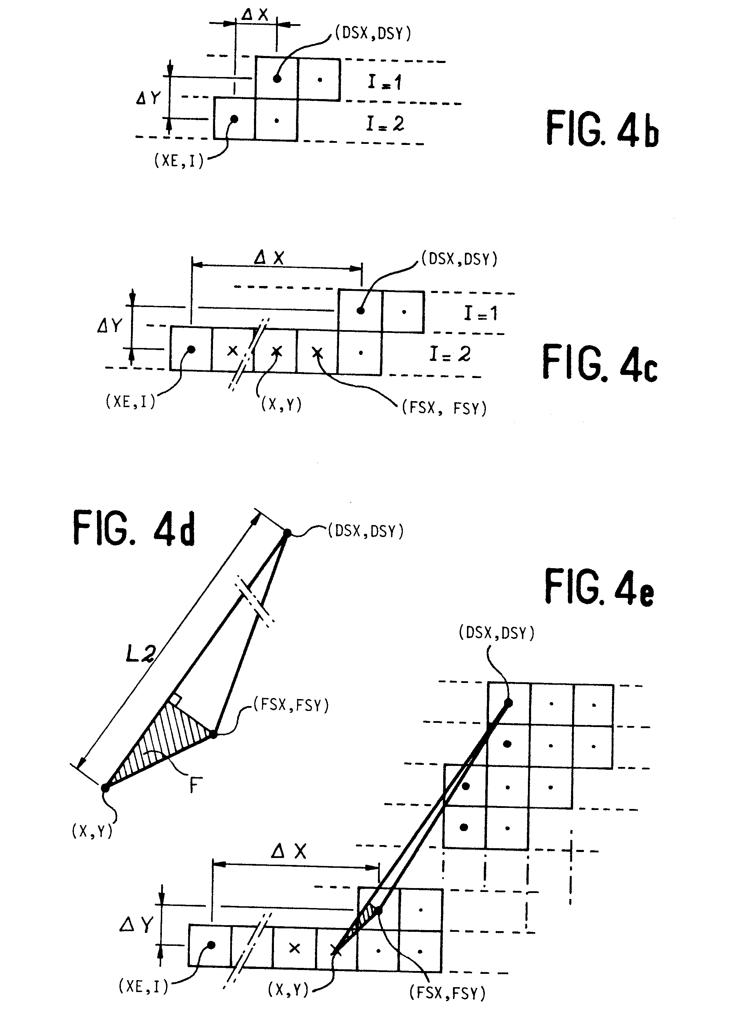

On va tout d'abord décrire l'opération de segmentation d'un profil (à titre d'exemple, le profil gauche) en relation avec l'organigramme de la figure 4a et les exemples de profils gauche des figures 4b à 4e.

A la fin de l'analyse de la ligne d'indice I, on à détecté le pixel de la ligne I qui appartient au profil gauche du caractère. On connaît également la suite de segments de droites qui constitue une appro ximation linéaire du profil gauche entre les lignes d'indice 1 et I-1. Le problème qui se pose est de savoir si le pixel de la ligne I du profil gauche se trouve sensiblement dans l'alignement du dernier segment de droite du profil (celui qui se termine sur la ligne I-1) ou non. Dans le premier cas, ledit dernier segment est prolongé jusqu'audit pixel de la ligne I ; dans le cas contraire, l'extrémité du dernier segment sur la ligne I-1 est un point de rupture : le dernier segment est mémorisé et un nouveau segment est ébauché entre ledit point du rupture et ledit pixel de la ligne I.

Le principe de la segmentation du profil apparaît clairement sur les exemples des figures 4b à 4e. Sur la figure 4b, on a représenté le cas de l'analyse des lignes d'indice $I = 1$ et $I = 2$. Pour la ligne $I = 1$, on initialise le premier segment en prenant pour point de départ le pixel de coordonnées (DSX, DSY). L'autre extrêmité de ce segment est, temporairement, le pixel de coordonnées (XE, I) de la ligne $I = 2$.

La figure 4b illustre le cas où les pixels (DSX, DSY) et (XE, I) sont voisins, c'est-à-dire pour lesquels $|\Delta X| \le 1$ et $|\Delta Y| \le 1$. Sur la figure 4c en revanche, ces deux pixels ne sont pas voisins. Dans ce cas, on complète le profil par des pixels, marqués d'une croix sur la figure, pour que le profil soit constitué d'une suite de pixels voisins. Le premier segment a pour première extrémité (DSX, DSY) et pour seconde extrémité, temporaire, le pixel voisin du profil, de coordonnées (FSX, FSY).

La segmentation du profil situé consiste à déterminer si l'un des pixels (X, Y) du profil situé entre le pixel (FSX, FSY), extrêmité temporaire du segment, et le pixel (XE, I), définissant le profil dans la ligne I, est un point de rupture. Un tel point de rupture est détecté si l'angle entre le segment d'extrêmités (DSX, DSY) et (FSX, FSY) est supérieur à l'angle entre un segment ayant pour extrêmités (DSX, DSY) et (X, Y).

Un critère pour la détection d'un point de rupture peut être de comparer le rapport $\frac{F}{L^2}$ (cf. figure 4d) à un seuil prédéfini, où F est la surface du triangle défini par les points (X, Y), (FSX, FSY) et $(\alpha, \beta)$ en notant $(\alpha, \beta)$ la projection orthogonale de (FSX, FSY) sur le segment d'extrêmités (DSX, DSY) et (X, Y), et où L2 est le carré de la longueur dudit segment.

Ce critère est appliqué successivement chaque pixel (X, Y) compris entre le pixel (FSX, FSY) et le pixel (XE, I) (figure 4c). Si le pixel (X, Y) constitue un point de rupture, on mémorise le pixel précédent ledit pixel (X, Y) comme extrêmité définitive du segment commençant en (DSX, DSY) et ledit pixel précédent constitue une extrêmité (DSX, DSY) du segment suivant.

La figure 4e illustre un cas semblable à celui de la figure 4c ($|\Delta X| > 1$) pour une valeur quelconque de l'indice I.

On va maintenant décrire en référence à la figure 4a un organigramme correspondant à une segmentation conforme aux figures 4b à 4e. Cet organigramme comprend un ensemble d'étapes de calcul et de test disposées entre une étiquette de début 48 et une étiquette de fin 50.

Le traitement commence par un test 52 sur l'indice de ligne I. Si $I = 1$, on initialise le début du premier segment à la valeur (XE, I) du pixel détecté dans l'étape 32 (figure 2), on mémorise les coordonnées dudit pixel

5

et on initialise à 1 une variable NP qui compte le nombre de points anguleux dans le profil segmenté.

Si I≠1, le test 52 est suivi d'un test 56 pour déterminer si I=2.

On calcule ensuite ΔX et ΔY dans une étape 58 pour I=2 (cf. figure 4c) et dans une étape 60 pour I≠2 (cf. figure 4e). On teste ensuite par des interrogations respectives 62 et 64 la valeur de ΔX pour déterminer si le pixel (XE, I) de la ligne analysé est voisin du pixel de la ligne I-1 qui constitue l'extrêmité temporaire du dernier segment de droite du profil segmenté.

Trois cas se présentent :

a) I=2 et |ΔX| ≤ 1

l'extrêmité temporaire du premier segment est égale au pixel (XE, I) (cf. figure 4b) ; une étape 66 initialise ladite extrêmité temporaire,

b) I≠2 et |ΔX| ≤ 1

On détermine par un test 68 si le pixel (XE, I) est un point de rupture, par exemple suivant le critère décrit en référence à la figure 4d. Si c'est un point de rupture (étape 70), l'extrêmité temporaire du dernier segment de droite devient définitive et est mémorisée. Concomitamment la variable NP est incrémentée. Cette extrêmité mémorisée devient le début du segment suivant ; l'extrêmité temporaire de ce nouveau segment est le pixel (XE, I),

c) |ΔX| ≤ 1

Dans ce cas, il faut compléter le profil entre l'extrêmité temporaire du dernier segment et le pixel (XE, I) (étape 72). Sur les figures 4c et 4e, ces pixels ajoutés au profil sont marqués d'une croix. Il faut ensuite tester successivement si chaque pixel ajouté (X, I) ou le pixel (XE, I) est un point de rupture (tests 74 = t 76). Si l'un desdits pixels est un point de rupture, on passe à l'étape 78 qui consis te à memoriser le pixel antécédent du point de rupture comme extrêmité définitive du dernier segment et comme début d'un nouveau segment. L'extrêmité temporaire de ce nouveau segment est le pixel (XE, I).

Les profils segmentés gauche et droit du caractère se construisent donc au fur et à mesure de l'analyse ligne à ligne de l'image. Pour simplifier la comparaison des profils segmentés avec les modèles de profil contenus dans la bibliothèque de profil, il est avantageux de remplacer chaque segment d'un profil segmenté, qui peut avoir une direction quelconque, par un segment pris dans un ensemble de segments prédéterminés ayant des directions particulières. Un tel traitement est connu sous le nom de codage de Freeman.

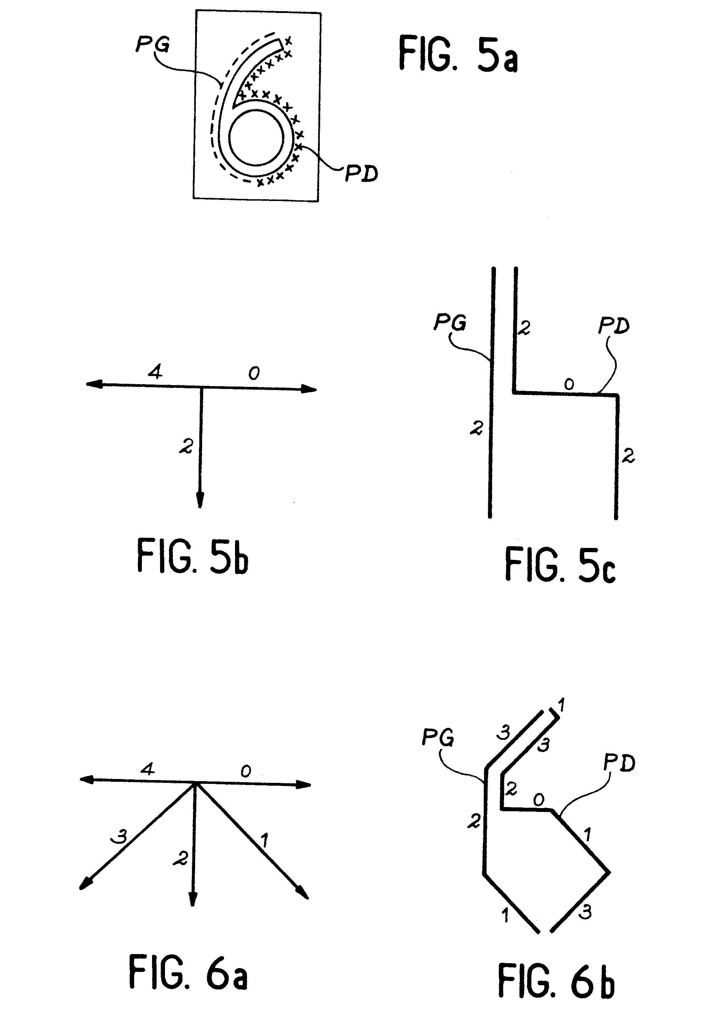

Par exemple, pour le caractère représenté sur la figure 5a, les profils gauche PG et droit PD sont codés par les profils de la figure 5c, lorsque les segments prédéterminés sont ceux de la figure 5b. Il s'agit dans ce cas du codage de Freeman simplifié qui est suffisant dans le cas de la reconnaissance de caractères numériques.

On a représenté sur la figure 6a un autre ensemble de segments prédéterminés, plus complet que celui de la figure 5b. Les profils gauche et droit du caractère codés par cet ensemble de segments prédéterminés sont représentés sur la figure 6b. Ces profils sont plus proches et permettent une reconnaissance aisée de tous les caractères, qu'ils soient numériques ou alphabétiques.

On a indiqué dans le tableau I les modèles de profils gauche PG et droit PD des chiffres 0,1,...,9 selon le codage de Freeman simplifié utilisant les segments de la figure 5b.

On constate que des chiffres différents peuvent avoir le même profil. C'est le cas par exemple des chiffres 7 et 9. Les profils codés d'un caractère à reconnaître ne sont donc pas toujours suffisants pour déterminer ledit caractère codé. Il faut alors tenir compte de la forme du caractère (nombre et taille des trous, par exemple) pour lever les ambiguïtés.

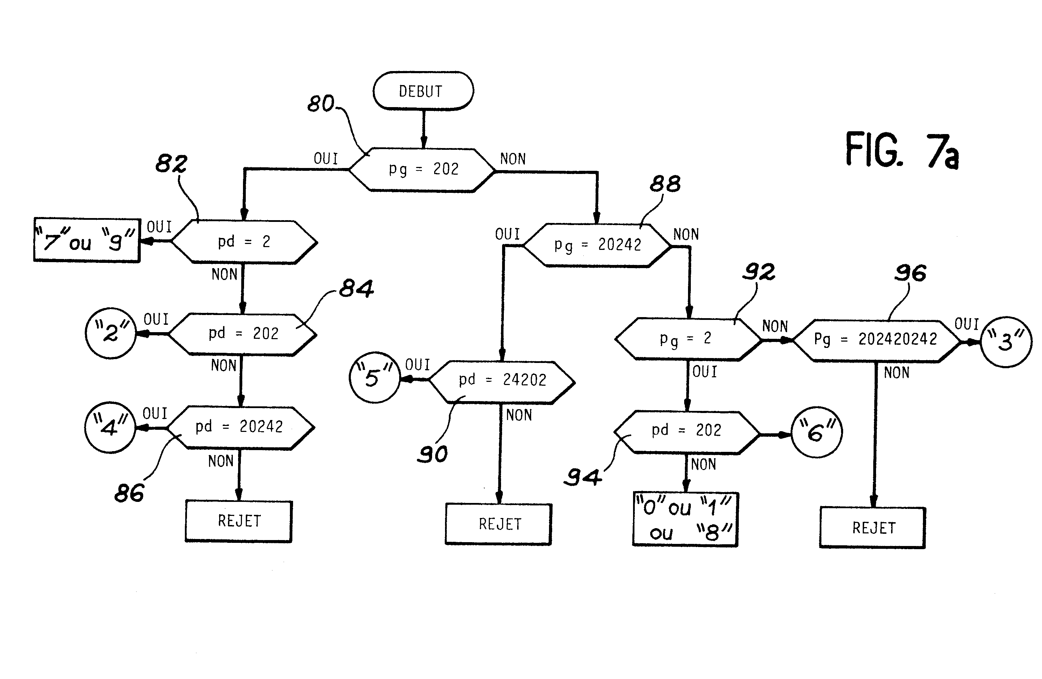

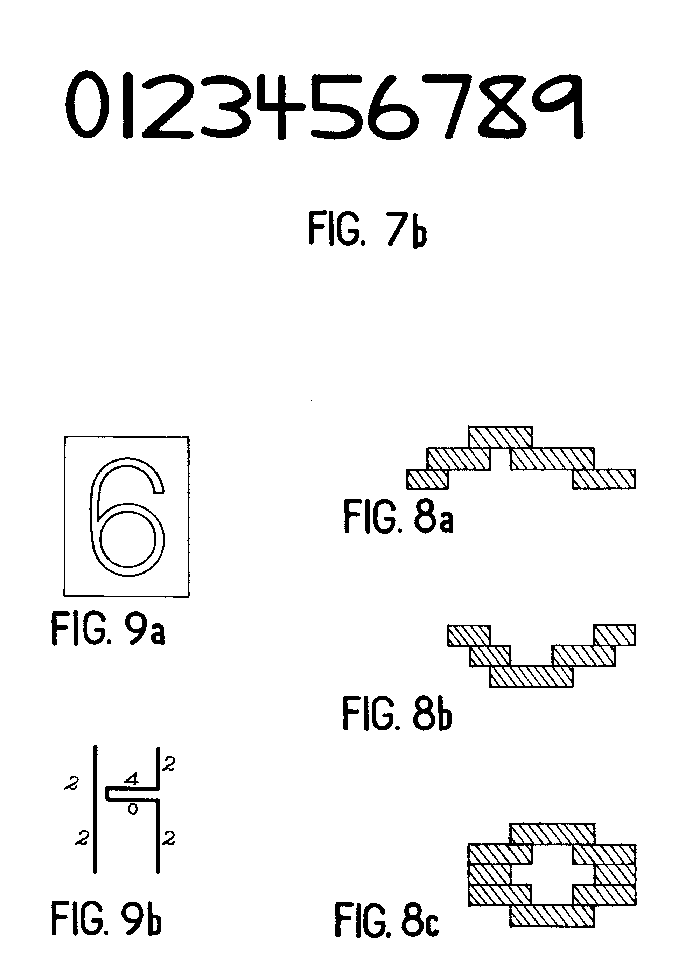

On a représenté sur la figure 7a un organigramme pour la reconnaissance d'un caractère numérique tracé selon la police de caractères représentée sur la figure 7b, à partir des ses profils codés gauche PG et droit PD en fonction de la classification du tableau I. L'organigramme se présente sous la forme d'une arborescence dont les feuilles indiquent soit le(s) chiffre(s) correspondant(s) aux profils, soit que les profils ne correspondent a aucun chiffre.

Cet organigramme comporte les tests suivants :
test 80 : PG=202
test 82 : PD=2
test 84 : PD=202
test 86 : PD=20242
test 88 : PG=20242
test 90 : PD=24202
test 92 : PG=2
test 94 : PD=202
test 96 : PG=202420242

Les caractères reconnus sont :
- "0" ou "1" ou "8", si les tests 80, 88, 92 et 94 sont respectivement faux, faux, vrai et faux,
- "2", si les tests 80, 82 et 84 sont respectivement vrai, faux et vrai,
- "3" si les tests 80, 88 et 92 sont faux et le test 96 vrai,
- "4" si les tests 80, 82, 84 et 86 sont respectivement vrai, faux, faux et vrai,
- "5" si les tests 80, 88 et 90 sont respectivement faux, vrai et vrai

- "7" ou "9" si les tests 80 et 82 sont vrais.

Pour lever les ambiguités qui subsistent lorsque le test 82 est vrai et le test 94 est faux, il faut tenir compte de paramètres supplémentaires. On peut s'intéresser par exemple à la topologie du caractère analysé.

Cette analyse topologique est connue en soi. Il n'apparaît donc pas nécessaire de la décrire en détail. Rappelons seulement qu'elle consiste à détecter des formes particulières telle qu'une voûte, un creux ou un trou dans le tracé du caractère. Ces trois formes sont représentées respectivement sur les figures 8a, 8b et 8c.

L'analyse topologique comprend essentiellement une étude de la connexité entre les segments détectés dans la ligne I en cours d'analyse de l'image (cf. figure 3c) et les segments détectés dans la ligne I-1.

L'étude de la connexité se traduit par des comparaisons entre la position d'un segment de la ligne I-1 et la position d'un segment de la ligne I. Ces calculs sont très simples et peuvent être faits en temps réel dès que les segments de la ligne I ont été mémorisés.

La méthode de reconnaissance décrite en référence à la figure 7a est efficace lorsque les caractères à reconnaître sont conformes à une ou plusieurs polices de caractères prédéfinies. Cette méthode s'applique donc notamment en sidérurgie pour la reconnaissance d'un code alphanumérique gravé sur un produit métallurgique défilant sur un tapis roulant.

La méthode décrite en référence à la figure 7a n'est en revanche plus adaptée lorsqu'il s'agit de reconnaître des caractères (cf figures 9a,9b) différents de ceux qui sont mémorsés(cf figures 5a,5c) par exemple des caractères manuscrits car les profils gauche et droit d'un caractère varient alors selon le scripteur.

Dans ce cas, la comparaison ne peut plus se fonder sur la recherche dans la bibliothèque des caractères mémorisés d'un caractère identique au caractère analysé mais doit viser à déterminer le caractère mémorisé le plus proche du caractère analysé. Cette proximité est définie par un critère de distance entre chaque profil du caractère analysé et le profil correspondant d'un caractère mémorisé.

Plus précisément, on choisit, à titre d'exemple, de définir un coefficient de ressemblance $\mu_\alpha(X)$ entre un profil PG du caractère analysé et le profil correspondant $PG_\alpha$ du $\alpha$ ème caractère de la bibliothèque par :

$$\mu_\alpha(PG) = \frac{1}{1+D(PG,PG_\alpha)}$$

où $D(PG, PG_\alpha)$ est la distance entre le profil PG et le profil $PG_\alpha$.

Le coefficient de ressemblance a une valeur comprise entre 0 et 1 ; cette valeur est d'autant plus proche de 1 que les profils PG et $PG_\alpha$ se ressemblent.

Selon l'invention, la distance $D(PG, PG_i)$ est calculée par comparaison dynamique des codes associés aux profils PG et $PG_\alpha$ et mesure le coût minimal pour transformer le profil PG en un profil $PG_\alpha$. Cette méthode de mesure est connue dans le domaine de la reconnaissance automatique de la parole notamment par l'article "Dynamic programming algorithm optimization for spoken word recognition" de Sakoe et al. paru dans IEEE Trans. ASSSP, vol. ASSSP-26, N° 1, fev. 1978.

La méthode s'applique deux chaînes de codes $PG = a_1a_2...a_n$ et $PG_\alpha = b_1b_2...b_n$ où n et m sont des entiers généralement différents et où les codes $a_i$ et $b_i$ sont par exemple les codes de direction dans un codage de Freeman.

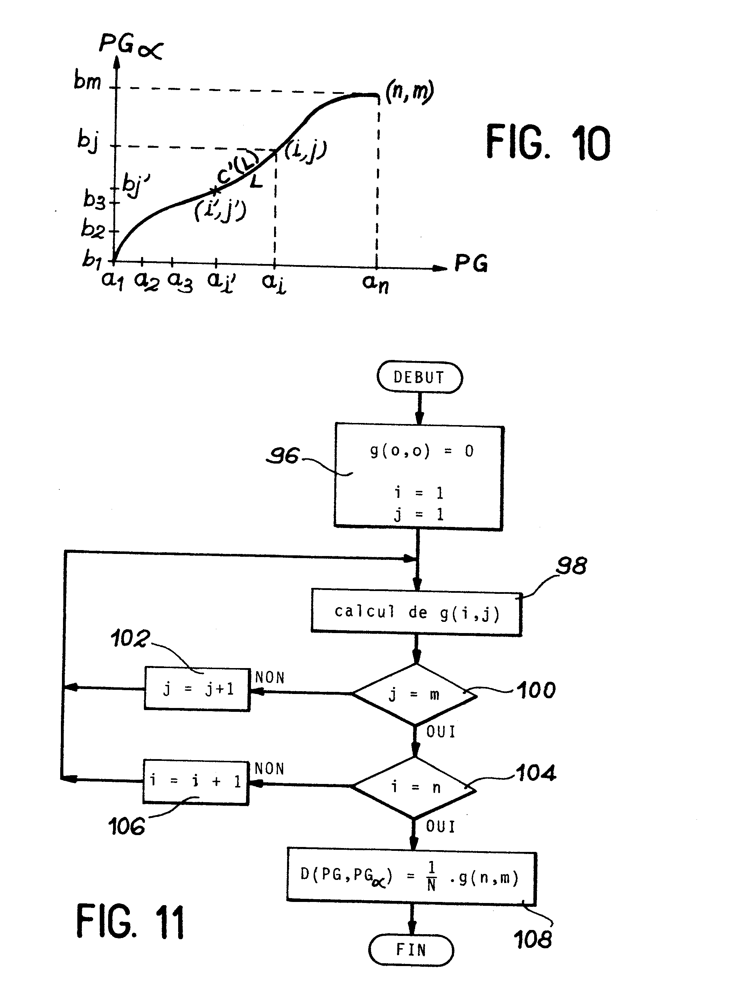

La représentation de ce problème peut se faire en traçant un plan (PG, $PG_\alpha$) et en cherchant un chemin discret menant de (1,1) à (n,m) comme indiqué sur la figure 10. Ce chemin indique le couplage entre les indices des deux chaînes qui correspond au chemin optimal passant par le point (i,j) et issu de l'un des points (i', j') proches de (i,j) et tels que : $i' \leq i$, $j' \leq j$ et $(i',j') \neq (i,j)$.

On note $d(a_i,b_j)$ la distance entre les éléments $a_i$ et $b_j$ et g(i,j) la distance cumulée calculée entre $PG(i) = a_1a_2...a_i$ et $PG_\alpha(j) = b_1b_2...b_j$.

Ainsi si C'(L) représente le chemin de longueur L reliant les points (i', j') et (i,j), l'algorithme de comparaison dynamique est défini par l'équation suivante :

$$(1) \quad g(i,j) = \min_{(i',j')} \left[ g(i',j') + \sum_{k=1}^{L} d(a_{i'+k}, b_{j'+k}) \cdot a(k) \right]$$

où a(k) est une fonction de pondération, les conditions initiales étant :
$g(1,1) = d(a_1,b_1)$

La distance $D(PG,PG_\alpha)$ cherchée est définie par l'équation suivante :
$D(PG,PG_\alpha) = \frac{1}{N} \cdot g(n,m)$
dans laquelle N est choisie parmi les valeurs n, m et n+m selon les applications.

Tous les chemins définis par l'équation (1) ne conviennent pas. Certains n'ont pas de sens physique. Pour éliminer ces chemins, la pente du chemin est soumise à une certaine contrainte.

Sans cette contrainte de pente, la discrimination entre caractères de nature différente est difficile puisque toutes les distorsions sont alors autorisées.

Sakoe et al. ont montré, dans l'article cité, que les meilleurs résultats sont obtenus avec des pentes a(k) dont les valeurs sont comprises entre 0,5 et 2.

La figure 11 illustre un organigramme de cette méthode de comparaison dynamique.

La première étape 96 est une opération d'initialisation de la fonction g et des indices de boucles i,j associés respectivement aux profils PG et $PG_\alpha$.

L'étape suivante 98 est le calcul de g(i,j) pour les valeurs courantes des indices i,j. A titre d'exemple, on peut utiliser la fonction suivante :

$$g(i,j) = \min \begin{bmatrix} g(i-1,j-2)+3/2(d(a_i,b_{j-1})+d(a_i,b_j)) \\ g(i-1,j-1)+2d(a_i,b_j) \\ g(i-2,j-1)+3/2(d(a_i-1,b_j)+d(a_i,b_j)) \end{bmatrix}$$

dans laquelle $a_i,b_j$ sont les codes des directions selon la figure 6a et où, pour deux codes a et b, d(a,b) est définie par le tableau suivant :

d ( a, b)

| a \ b | 0 | 1 | 2 | 3 | 4 |
|---|---|---|---|---|---|
| 0 | 0 | 1 | 4 | 9 | 16 |
| 1 | 1 | 0 | 1 | 4 | 9 |
| 2 | 4 | 1 | 0 | 1 | 4 |
| 3 | 9 | 4 | 1 | 0 | 1 |
| 4 | 16 | 9 | 4 | 1 | 0 |

Ce calcul est répété pour chaque valeur de j comprise entre 1 et m et pour chaque valeur de i comprise entre 1 et n au moyen de deux boucles imbri quées, l'une comprenant un test 100 sur la valeur de j et une opération 102 d'incrémentation de j, et l'autre comprenant un test 104 sur la valeur de i et une opération 106 d'incrémentation de i.

Lorsque toutes les valeurs de g(i,j) sont calculées, la distance est obtenue par l'opération 108. La variable N est choisie par exemple égale à n+m.

A titre d'exemple, comparons le profil PG = 321023 aux profils $PG_{\alpha 1}$ = 2023 et $PG_{\alpha 2}$ = 123123.

Pour PG = 321023 et $PG_{\alpha 1}$ = 2023, on obtient le tableau suivant pour les valeurs de la fonction g :

| PG \ $PG_{\alpha 1}$ | | 3 | 2 | 1 | 0 | 2 | 3 |
|---|---|---|---|---|---|---|---|
| | g (i,j) | 1 | 2 | 3 | 4 | 5 | 6 |
| 2 | 1 | 2 | 1 | 2 | 6 | 4 | 5 |
| 0 | 2 | 11 | 7 | 3 | 2 | 8 | 20 |
| 2 | 3 | 4 | 3,5 | 4 | 8 | 2 | 3,5 |
| 3 | 4 | 3 | 4,5 | 11,5 | 22,5 | 3,5 | 2 |

d'où $\quad d(PG,PG_{\alpha 1}) = \dfrac{1}{n+m}g(n,m) = \dfrac{1}{4+6} \cdot 2 = 0,2$ et

$\mu_{\alpha 1}(PG) = \dfrac{1}{1+0,2} = 0,83.$

Pour PG = 321023 et $PG_{\alpha 2}$ = 123123, on obtient le tableau suivant pour les valeurs de la fonction g :

| PG / PGα2 | | 3 | 2 | 1 | 0 | 2 | 3 |
|---|---|---|---|---|---|---|---|
| | g(i,j) | 1 | 2 | 3 | 4 | 5 | 6 |
| 1 | 1 | 5 | 3 | 2 | 3 | 4 | 8 |
| 2 | 2 | 3 | 2,5 | 3,5 | 10 | 3 | 4,5 |
| 3 | 3 | 2 | 3,5 | 10,5 | 21,5 | 4,5 | 3 |
| 1 | 4 | 6 | 4 | 3,5 | 5 | 13 | 9 |
| 2 | 5 | 6 | 3,5 | 5 | 11,5 | 5 | 6,5 |
| 3 | 6 | 5 | 6,5 | 11,5 | 23 | 6,5 | 5 |

$$\text{d'où} \quad D(PG, PG_{\alpha 2}) = \frac{1}{n+m} \cdot g(n,m) = \frac{1}{6+6} \cdot 5 = 0,41 \quad \text{et}$$

$$\mu_{\alpha 2}(PG) = \frac{1}{1+0,41} = 0,71.$$

La distance minimum correspond au profil qui a le coefficient de ressemblance le plus élevé ; pour cet exemple c'est $PG_{\alpha 1}$.

Dans la description qui précéde, on a indiqué comment calculer la distance entre un profil du caractère analysé et le profil correspondant d'un caractère mémorisé et le coefficient de ressemblance associé.

En pratique, il faut calculer les distances des deux profils du caractère analysé aux profils correspondants d'un caractère mémorisé, et en déduire un coefficient de ressemblance qui dépend de ces deux distances. On peut choisir par exemple comme coefficient de ressemblance associé à un caractère le plus grand des coefficients de ressemblance associés à chaque profil du caractère.

Le tableau 2 donne la valeur du coefficient de ressemblance entre un caractère manuscrit analysé et des caractères de référence mémorisés dans la bibliothèque. Ces valeurs ont été obtenues expérimentalement par les inventeurs.

La valeur de ce coefficient de ressemblance est généralement proche de 1 lorsque le caractère analysé est comparé au caractère mémorisé identique.

On peut donc considérer que lorsque le coefficient de ressemblance est supérieur à un seuil, qui peut être égal à 0,87 par exemple, le caractère analysé est reconnu.

Symétriquement, lorsque le coefficient de ressemblance est inférieur à un autre seuil, qui peut être égal à 0,65 par exemple, le caractère analysé n'est pas reconnu (trop de caractères de référence restent possibles), et la reconnaissance est interrompue.

Pour des coefficients de ressemblance compris entre ces deux seuils, le caractère analysé n'est pas reconnu mais il ne reste plus que deux ou trois caractères de référence possibles. Cette indécision peut être levée comme on l'a indiqué précédemment en référence à la Figure 7a en prenant en compte des paramètres liés à la topologie du caractère analysé.

En résumé, le procédé de reconnaissance de caractères de l'invention est un procédé d'analyse ligne à ligne de l'image contenant le caractère, cette analyse consistant principalement à obtenir des profils, éventuellement codés, gauche et droit du caractère, et à comparer lesdits profils, éventuellement codés, à des modèles de profils contenus dans une bibliothèque. L'analyse ligne à ligne peut également inclure des traitements complémentaires, tel que par exemple une analyse topologique, pour faciliter la reconnaissance du caractère lorsqu'une ambiguïté peut subsister au seul vu des profils codés.

TABLEAU I

|   | PG | PD |
|---|---|---|
| 0 | 2 | 2 |
| 1 | 2 | 2 |
| 2 | 202 | 202 |
| 3 | 202420242 | 2 |
| 4 | 202 | 20242 |
| 5 | 20242 | 20242 |
| 6 | 2 | 202 |
| 7 | 202 | 2 |
| 8 | 2 | 2 |
| 9 | 202 | 2 |

TABLEAU 2

caractères de référence

| caractères analysés \ référence | 0 | 1 | 2 | 3 | 4 | 5 | 6 | 7 | 8 | 9 |
|---|---|---|---|---|---|---|---|---|---|---|
| 0 | 1 | 0,37 | 0,44 | 0,5 | 0,6 | 0,5 | 0,86 | 0,55 | 0,75 | 0,63 |
| 1 | 0,35 | 1 | 0,49 | 0,35 | 0,46 | 0,34 | 0,38 | 0,49 | 0,36 | 0,42 |
| 2 | 0,57 | 0,45 | 0,88 | 0,57 | 0,55 | 0,53 | 0,6 | 0,58 | 0,73 | 0,53 |
| 3 | 0,57 | 0,5 | 0,51 | 0,93 | 0,62 | 0,67 | 0,58 | 0,58 | 0,65 | 0,65 |
| 4 | 0,5 | 0,62 | 0,6 | 0,54 | 1 | 0,54 | 0,59 | 0,53 | 0,53 | 0,7 |
| 5 | 0,37 | 0,43 | 0,44 | 0,59 | 0,52 | 0,8 | 0,39 | 0,45 | 0,41 | 0,52 |
| 6 | 0,68 | 0,51 | 0,63 | 0,49 | 0,6 | 0,54 | 0,9 | 0,54 | 0,64 | 0,54 |
| 7 | 0,53 | 0,5 | 0,48 | 0,52 | 0,52 | 0,52 | 0,54 | 0,86 | 0,54 | 0,54 |
| 8 | 0,61 | 0,38 | 0,46 | 0,68 | 0,56 | 0,63 | 0,74 | 0,53 | 0,92 | 0,61 |
| 9 | 0,63 | 0,57 | 0,58 | 0,61 | 0,72 | 0,61 | 0,68 | 0,55 | 0,62 | 1 |

caractères analysés

## Revendications

1. Procédé de reconnaissance de caractères en temps réel, notamment sur des objets en défilement rapide, dans lequel on obtient une image d'un caractère au moyen d'une caméra, procédé caractérisé en ce que l'image est analysée séquentiellement ligne par ligne pour déterminer les profils gauche (PG) et droit (PD) dudit caractère, et pour comparer lesdits profils à des modèles de profils de caractères contenus dans une bibliothèque, ladite comparaison permettant de déterminer ledit caractère analysé.

2. Procédé selon la revendication 1, caractérisé en ce que, pour chaque ligne d'image, on effectue une convolution sur le signal de ligne, puis un seuillage, le premier pixel du signal de ligne convolué, dont le niveau est supérieur au seuil, définissant le profil gauche du caractère dans la ligne analysée et le dernier pixel du signal de ligne convolue, dont le niveau est supérieur au seuil, définissant le profil droit du caractère dans la ligne analysée.

3. Procédé selon l'une quelconque des revendications 1 et 2, caractérisé en ce que, lorsque le pixel définissant l'un des profils du caractère dans la ligne analysée et le pixel définissant le même profil dans la ligne précédente ne sont pas voisins, ledit profil est complété par une suite de pixels de ladite ligne analysée de sorte que ledit profil soit défini par une suite de pixels voisins.

4. Procédé selon l'une quelconque des revendications 1 à 3, caractérisé en ce que les profils gauche et droit dudit caractère composés chacun d'une suite de pixels voisins, sont segmentés, lesdits profils segmentés étant comparés aux modèles de profils pour déterminer ledit caractère analysé.

5. Procédé selon la revendication 4, caractérisé en ce que les profils segmentés sont codés par un codage de Freeman, lesdits profils codés étant comparés aux modèles de profils pour déterminer le caractère analysé.

6. Procédé selon la revendication 4, caractérisé en ce que les profils segmentés sont codés par un codage de Freeman simplifié, lesdits profils codés étant comparés aux modèles de profils pour déterminer le caractère analyse.

7. Procédé selon l'une quelconque des revendications 4 à 6, caractérisé en ce que :
- on calcule par une méthode de comparaison dynamique la distance entre les profils du caractère analysé et les profils correspondants de chaque modèle de caractère, cette distance étant une mesure du coût minimal pour passer du profil du caractère analysé au profil dudit modèle de caractère,
- on calcule un coefficient de ressemblance entre ledit caractère analysé et ledit modèle de caractère, comme une fonction de ladite distance,
- on compare ledit coefficient de ressemblance à un premier seuil et on déclare reconnu le caractère analysé si ledit coefficient est supérieur audit premier seuil.

8. Procédé selon l'une au moins des revendications 4, 5, 6 et 7, caractérisé en ce que en outre chaque ligne d'image analysée est comparée à la ligne d'image précédente pour détecter la présence d'au moins l'un des éléments topologiques suivants : voûte, creux ou trou ; lesdits éléments topologiques étant pris en compte pour la reconnaissance du caractère lorsque les profils gauche et droit dudit caractère ne permettent pas, eux seuls, de reconnaître ledit caractère.

9. Procédé selon l'une quelconque des revendications 7 et 8, caracterisé en ce que, si tous les coefficients de ressemblance associés aux modèles de caractères sont inférieurs audit premier seuil, on compare lesdits coefficients de ressemblance un second seuil inférieur audit premier seuil, et on prend en compte les éléments topologiques du caractère analysé pour déterminer à quel caractère, parmi ceux dont les modèles de caractère ont un coefficient de ressemblance supérieur audit second seuil, correspond ledit caractère analysé.

. Procédé selon la revendication 4 pour la reconnaissance de caractères défilant devant la caméra, caractérisé en ce que la caméra est une caméra linéaire du type dispositif à transfert de charges.

0228322

FIG. 1

FIG. 3

0228322

FIG. 2

0228322

# FIG. 4a

0228322

FIG. 4b

FIG. 4c

FIG. 4d

FIG. 4e

0228322

FIG. 5a

FIG. 5b

FIG. 5c

FIG. 6a

FIG. 6b

DEBUT

80

OUI ← pg = 202 → NON

82

"7"ou "9" ← OUI — pd = 2

NON

84

"2" ← OUI — pd = 202

NON

"4" ← OUI — pd = 20242

86

NON

REJET

88

OUI ← pg = 20242 → NON

OUI

"5" ← OUI — pd = 24202

90

NON

REJET

92

pg = 2 — NON → Pg = 202420242 — OUI → "3"

96

OUI

pd = 202 → "6"

94

NON

"0" ou "1" ou "8"

NON

REJET

FIG. 7a

0228322

# 0123456789

FIG. 7b

FIG. 8a

FIG. 9a

FIG. 8b

FIG. 9b

FIG. 8c

0228322

FIG. 10

FIG. 11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 755 780 (SAMMON et al.) * Colonne 5, ligne 53 - colonne 7, ligne 9; figures 6,7 * | 1,4,5 | G 06 K 9/48 |
| Y | | 2,7,10 | |
| Y | SIEMENS FORSCHUNGS- UND ENTWICKLUNGSBERICHTE, vol. 8, no. 5, 1979, pages 297-302, Springer-Verlag, Berlin, DE; U. HENDRICKS et al.: "Analoge Echtzeitbildverarbeitung zur Erzeugung binärer Muster" * Pages 298,299, chapître 2 * | 2,10 | |
| Y | DE-A-3 515 159 (CANON K.K.) * Résumé; figures 1-3,7-15 * | 7 | |
| X | IBM TECHNICAL DISCLOSURE BULLETIN, vol. 8, no. 8, janvier 1966, pages 1091-1093, New York, US; M.F. BOND: "Character recognition by feature determination" * En entier * | 1 | G 06 K 9/00 |

--- -/-

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 02-03-1987 | SONIUS M.E. |

**Office européen des brevets**

# RAPPORT DE RECHERCHE EUROPEENNE

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| A | IBM TECHNICAL DISCLOSURE BULLETIN, vol. 16, no. 4, septembre 1973, pages 1247-1248, New York, US; T.E. CASSADA et al.: "Facsimile threshold with full background control" * En entier * | 2 | |
| A | FR-A-1 535 341  (THE MARCONI CO. LTD) * Résumé * | 8 | |

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 02-03-1987 | SONIUS M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82